# EUROPÄISCHE PATENTSCHRIFT

(11) **EP 0 710 211 B1**
(45) Veröffentlichungstag und Bekanntmachung des Hinweises auf die Patenterteilung: **08.09.1999**
(21) Anmeldenummer: 95912127.8
(22) Anmeldetag: 07.03.1995
(51) Int. Cl.: B65F 1/00, B65F 1/14, F25D 29/00

(54) **MÜLLREDUZIERUNGS- UND VERWERTUNGSANLAGE**
GARBAGE REDUCING AND RECYCLING PLANT
INSTALLATION PERMETTANT DE REDUIRE LE VOLUME DES DECHETS ET DE LES RECYCLER

(30) Priorität: 07.03.1994 DE 4407600
(43) Veröffentlichungstag der Anmeldung: 08.05.1996
(73) Patentinhaber: UBIB UNTERNEHMENSBERATUNG GMBH, D-89186 Illerrieden (DE)
(72) Erfinder: KURIG, Richard, D-89186 Illerrieden (DE)
(74) Vertreter: Döring, Wolfgang, Dr.-Ing. Patentanwälte Hauck, Graalfs, Wehnert, Döring, Siemons
(86) Internationale Anmeldenummer: DE9500307
(87) Internationale Veröffentlichungsnummer: WO9524349

(56) Entgegenhaltungen:
- EP-A- 0 458 712
- DE-A- 1 501 207
- DE-A- 3 517 525
- DE-A- 3 525 765
- DE-U- 9 216 358
- FR-A- 2 694 273
- US-A- 3 255 597
- US-A- 3 686 889
- US-A- 3 982 407
- US-A- 4 058 412

## Beschreibung

Die Erfindung betrifft eine Müllreduzierungs- und Verwertungsanlage mit den Merkmalen des Oberbegriffs des Patentanspruchs 1.

Die Müllentsorgung ist in den letzten Jahren zu einem großen wirtschaftlichen wie ökologischen Problem geworden. Auch die Einführung des sogenannten "Dualen Systems", bei dem z. B. Kunststoffe und Papier in getrennten Behältern gesammelt und von Entsorgungsfirmen abgeholt und der Wiederverwertung zugeführt werden sollen, hat zu keiner spürbaren Entlastung des Müllproblems geführt, da die entsprechenden Recyclingwege noch nicht in einem ausreichenden Maße zur Verfügung stehen. Ferner wird der Verbraucher neben den kommunalen Müllgebühren noch mit weiteren Gebühren belastet, ohne daß das Grundproblem gelöst ist.

Durch eine konsequente Verminderung des Müllvolumens könnten bestehende Deponien länger betrieben und es müßten weniger Flächen für neue Deponien ausgewiesen werden. Der Betrieb von weiteren, ökologisch bedenklichen Müllverbrennungsanlagen, mit denen ein sehr kostenintensives Müllbeseitigungsverfahren betrieben wird, könnte zumindest stark reduziert werden, wenn anfallende Müllfraktionen in einem größeren Maße als bisher wiederverwertet werden könnten.

Neben der Müllvermeidung ist somit eine Reduktion des Müllvolumens sowie die Überführung des Mülls in ein wiederverwertbares Wirtschaftsgut anzustreben. Derartige Verfahren sollten ökologisch unbedenklich und kostengünstig sein.

Aus der FR-A-2 694 273 ist eine Müllreduzierungs- und Verwertungsanlage mit den Merkmalen des Oberbegriffs des Patentanspruchs 1 bekannt. Die bekannte Anlage besitzt als Zerkleinerungseinrichtung eine sich durch mehrere Arbeitsmodule erstreckende Welle, auf der je nach Arbeitsmodul unterschiedliche Verkleinerungselemente angeordnet sind.

Aus der US-A-3 982 407 ist eine Lagereinrichtung für mehrere Müllcontainer bekannt, die eine Kühleinrichtung aufweist, um die organische Zersetzung des in den Müllcontainern befindlichen Mülls zu verlangsamen.

Der Erfindung liegt die Aufgabe zugrunde, eine Müllreduzierungs- und Verwertungsanlage der angegebenen Art zu schaffen, mit der die anfallenden Müllfraktionen besonders schnell und effektiv zerkleinert bzw. volumenreduziert werden können.

Diese Aufgabe wird erfindungsgemäß bei einer Müllreduzierungs- und Verwertungsanlage der angegebenen Art durch die kennzeichnenden Merkmale des Patentanspruchs 1 gelöst.

Durch die Zerkleinerung der einzelnen Müllfraktionen, z. B. Papier/Pappe, Kunststoff, Glas, Blech, organische Stoffe, Problemmüll, die in den einzelnen Arbeitsmodulen getrennt verarbeitet werden, kann das Volumen bis unter 10 % des Ausgangsvolumens reduziert werden. Kunststoff-Abfälle werden dabei zu Granulat verarbeitet, während Glas zerbrochen oder fein zerkleinert wird. Küchen- und Problemabfälle ergeben nach Zerkleinerung wertvolle Kompostbestandteile. Blechdosen werden vorzugsweise nur gepreßt und so in ihrem Volumen stark reduziert.

Der Zerkleinerungsgrad wird dabei in Abhängigkeit von der Verwertung der erzielten Wirtschaftsgüter gewählt werden.

Die Zerkleinerung derartiger Materialien wird erheblich erleichtert, wenn gekühlte, insbesondere auf Temperaturen unter 0°C abgekühlte Materialien zerkleinert werden. Die dann sehr spröden Müllfraktionen können so in den Zerkleinerungseinrichtungen erheblich einfacher, schneller und effektiver zerkleinert werden. Ferner steigt der Zerkleinerungsgrad erheblich an. Die Müllreduzierungs- und Verwertungsanlage nach der Erfindung weist dafür mindestens eine Kühleinrichtung auf.

Diese Kühleinrichtung kann in jedem einzelnen Arbeitsmodul angeordnet werden, oder es kann eine Kühleinrichtung vorgesehen sein, die in einem getrennten Kältemodul angeordnet ist, das in Abhängigkeit von den zu verarbeitenden Müllfraktionen mit einzelnen Arbeitsmodulen verbunden ist. Die Kühleinrichtung kann eine konventionelle Gefriereinrichtung (Kältemaschine) sein. Alternativ kann mit Trockeineis oder mit flüssigem Stickstoff gekühlt werden.

Nach einer bevorzugten Ausführungsform der Erfindung weist ein Kältemodul einen flüssigen Stickstoff enthaltenden Stickstoffbehälter auf, an den ein Stickstoffverteiler mit einzelnen leitungsabgängen zu den jeweiligen Arbeitsmodulen angeschlossen ist. In den Arbeitsmodulen kann dann mittels Düsen flüssiger Stickstoff den einzelnen Müllfraktionen zugeführt werden, so daß diese relativ schnell unter 0°C abgekühlt werden können. Über in den Arbeitsmodulen angeordnete Meßfühler kann ein vorbestimmter Temperaturbereich, z. B. -30°C bis -60°C, gewährleistet sein. Um dies zu erreichen, ist bei den meisten Müllfraktionen in Abhängigkeit von deren Größe eine Gefrierzeit von etwa 40 Sekunden notwendig.

Alternativ kann mit CO₂ gekühlt werden. Jedoch ist die Verwendung von bekannten Tiefkühlaggregaten ebenfalls gut geeignet.

Nach der Abkühlung auf vorzugsweise unter 0°C werden die einzelnen Müllfraktionen in den Zerkleinerungseinrichtungen zerkleinert. In Abhängigkeit von der Müllfraktion können hierzu Backenpressen, Zerkleinerungswalzen und/oder Schneidsysteme mit Schnecken vorgesehen sein. Alternativ können die Müllfraktionen, insbesondere Blechdosen, durch eine Presse in ihrem Volumen reduziert werden.

Nach der Zerkleinerung werden die gekühlten und zerkleinerten Materialien einem Reststoff-Behälter zugeführt. Dieser Reststoffbehälter wird vorzugsweise ebenfalls gekühlt, so daß die zerkleinerten Materialen bei Temperaturen von vorzugsweise unter 0°C gelagert werden. Damit wird eine Geruchsbelästigung vermieden, die ansonsten aufgrund der Verschmutzung und aufgrund mikrobieller Tätigkeit sich einstellen könnte. Es wird heute zwar schon in einem erheblichen Maße Müll/Abfall getrennt gesammelt, jedoch weisen die einzelnen Müllfraktionen zum Teil erhebliche Verschmutzungsgrade auf. Die Reinigung bzw. Spülung der einzelnen Abfallfraktionen erfordert einen hohen Arbeits- und Energieaufwand. Diese Arbeitsleistung wird von dem Endverbraucher oder von Kleingewerbebetrieben etc. zum großen Teil nicht erbracht. So befinden sich z. B. in Blechdosen oder Glasflaschen Reste von Nahrungsmitteln bzw. von Flüssigkeiten. Solche Müllfraktionen können zu erheblichen Geruchsbelästigungen führen. Durch die Kühlung der zerkleinerten Materialien in den Reststoff-Behältern wird eine derartige Geruchsbelästigung weitgehend vermieden.

Die Reststoff-Behälter können ferner mittels einer getrennten Kühleinrichtung, z. B. einer batteriegetriebenen Kühleinrichtung, gekühlt werden. Dazu kann eine Stickstoffflasche vorgesehen sein, so daß N₂ in den Reststoff-Behälter eingesprüht wird, wenn die Temperatur zu stark ansteigt und/oder wenn die Kühleinrichtung zur Abkühlung der in die Anlage eingeworfenen Müllfraktionen ausfällt.

Für den Betrieb aller vorgesehenen Kühleinrichtungen kann ferner ein Notstromaggregat vorliegen.

Eine Geruchsbelästigung kann ferner dadurch vermieden werden, daß die Müllfraktionen vor und/oder nach der Zerkleinerung gereinigt werden. Dazu können die Arbeismodule z. B. Sprühvorrichtungen und ggf. Trockenvorrichtungen aufweisen.

Gemäß einer weiteren bevorzugten Ausführungsform der Erfindung kann die Anlage zentral über ein Zentralmodul gesteuert werden. Dabei können die einzelnen Arbeitsmodule unabhängig voneinander betrieben bzw. abgeschaltet werden. Der Betrieb kann automatisch erfolgen oder er kann per Hand durchgeführt werden. So können beispielsweise die einzelnen Arbeitsabläufe in den Arbeitsmodulen nach Einführung einer bestimmten Menge einer Müllfraktion automatisch ablaufen, wenn ein Verriegelungsdeckel der Arbeitsmodule geschlossen wird. Das Zentralmodul kann ferner eine Hydraulikeinrichtung aufweisen, mit der die oben erwähnten Verriegelungsdeckel betrieben werden können. In den einzelnen Arbeitsmodulen können zudem hydraulisch betätigbare Schieber für die Zuführung der einzelnen Müllfraktionen zu den Volumenreduktions- bzw. Zerkleinerungseinrichtungen und/oder zu den ReststoffBehältern vorgesehen sein. Diese Schieber sind dann ebenfalls mit der zentralen Hydraulikeinrichtung verbunden.

Falls beispielsweise ein Papiermodul bei der Anlage nach der Erfindung vorgesehen ist, kann ein derartiges Modul eine Hydraulikpresse, die mit der zentralen Hydraulikeinrichtung verbunden ist, aufweisen, so daß die zuvor zerkleinerten Papiermaterialien zu Papierbriketts gepreßt werden können. Im Falle der Papierverarbeitung ist in der Regel eine Abkühlung nicht erforderlich, so daß ein Papiermodul keine eigene Kühleinrichtung aufweist oder an ein Kältemodul angeschlossen ist. Vorteilhaft ist jedoch eine Befeuchtung der Papiermaterialen. Diese Befeuchtung kann vor oder nach der Zerkleinerung der Papiermaterialien erfolgen. Für die Befeuchtung kann ein Papiermodul eine Sprüheinrichtung aufweisen. Anschließend erfolgt die Pressung zu Papierbriketts, z. B. mittels einer Hydraulikpresse. In Abhängigkeit von der Verwertung der Papierbriketts, z. B. als schall- und/oder wärmedämmende Materialien, können diese ferner noch mit Mitteln zur Unterdrückung von mikrobiellem Wachstum und/oder mit Flammschutzmittel behandelt werden. Eine derartige Behandlung, z. B. über eine Sprühvorrichtung, ist selbstverständlich auch bei den anderen aus den verschiedenen Müllfraktionen entstehenden Wirtschaftsgütern möglich bzw. erwünscht.

Die Müllreduzierungs- und Verwertungsanlage nach der Erfindung führt somit zu stark verkleinerten/ volumenreduzierten Wirtschaftsgütern, die problemlos wiederverwertbar sind. Beispielsweise können aus den Papier/Pappe-Briketts Dämmstoffe, Isoliermatten, Behälter oder Pflanz- und Setzkästen hergestellt werden. Die anfallenden Kunststoff- und Glasmaterialen können in verschiedenster Weise wiederverwertet werden. Organische

Abfälle werden kompostiert. Die Anlage nach der Erfindung wird regelmäßig gewartet, betreut und entsorgt, so daß die Endverbraucher keine weiteren Aufgaben zu übernehmen haben.

Die Müllreduzierungs- und Verwertungsanlage kann modulartig aufgebaut sein, so daß in Abhängigkeit von dem Anwender die verschiedensten Arbeitsmodule zugeschaltet werden können. Welche Module notwendig sind und welche Verarbeitungsleistung erforderlich ist, kann durch eine vorgeschaltete Müllmengen- und Sortenanalyse ermittelt werden.

Mit der Müllreduzierungs- und Verwertungsanlage nach der Erfindung ist es insbesondere in vorteilhafter Weise möglich, die einzelnen Müllfraktionen dort in ihrem Volumen zu reduzieren bzw. zu zerkleinern und sie in Wirtschaftsgüter zu überführen, wo diese Müllfraktionen anfallen, z. B. in Schulen, Bahnhöfen, Restaurants, Ämter und Behörden, Krankenhäuser, Gewerbebetriebe, Mehrfamilienhäuser etc.
Die Erfindung wird im folgenden anhand von Ausführungsbeispielen und unter Bezug auf die Zeichnungen näher erläutert.
- Figur 1: zeigt in Draufsicht eine Ausführungsform einer Müllreduzierungs- und Verwertungsanlage nach der Erfindung.
- Figur 2: zeigt die Ausführungsform nach Figur 1 in Vorderansicht.
- Die Figuren 3 und 4: zeigen schematisch im Schnitt das Zentralmodul der Ausführungsform nach Figur 1.
- Figur 5: zeigt schematisch im Schnitt das Kältemodul der Ausführungsform nach Figur 1.
- Figur 6: zeigt schematisch im Schnitt das Papier/Pappe-Modul der Ausführungsform nach Figur 1.
- Figur 7: zeigt schematisch im Schnitt das Blechmodul der Ausführungsform nach Figur 1.
- Figur 8: zeigt schematisch im Schnitt das Problemmüllmodul und das Modul für den organischen Müll der Ausführungsform nach Figur 1.
- Figur 9: zeigt schematisch im Schnitt ein Arbeitsmodul gemäß einer anderen Ausführungsform der Erfindung.
- Figur 10: zeigt schematisch in Seitenansicht ein Papier/Pappe-Modul gemäß einer weiteren Ansführungsform der Erfindung.
- Figur 11: zeigt schematisch in Vorderansicht das Papier/Pappe-Modul nach Figur 10.

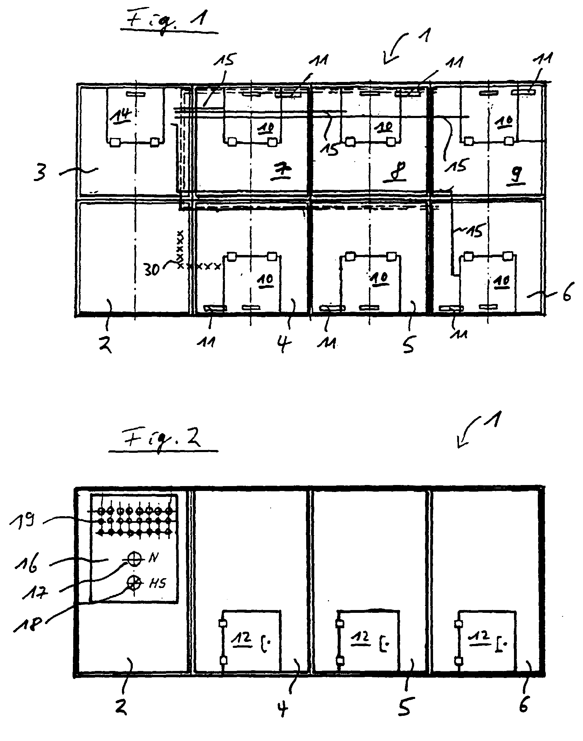

Die Figur 1 zeigt eine Müllreduzierungs- und Verwertungsanlage 1, die ein Zentralmodul 2, ein Kältemodul 3, ein Papier/Pappe-Modul 4, ein Blechmodul 5, ein Glasmodul 6, ein Modul für organische Abfälle 7, ein Problemmüll-Modul 8 und ein Kunststoff-Modul 9 aufweist.

Die Module 4 - 9 weisen jeweils einen Einwurfdeckel 10 für die Einführung der einzelnen Müllfraktionen in die Arbeitsmodule auf. Die Deckel 10 sind beim Betrieb der Arbeitsmodule hydraulisch verriegelt, so daß bei laufender Müllverarbeitung keine Öffnung der Deckel möglich ist. An den Deckeln sind Deckelverschlußschieber 11 angeordnet, die von dem Zentralmodul 2 aus betätigt werden können.

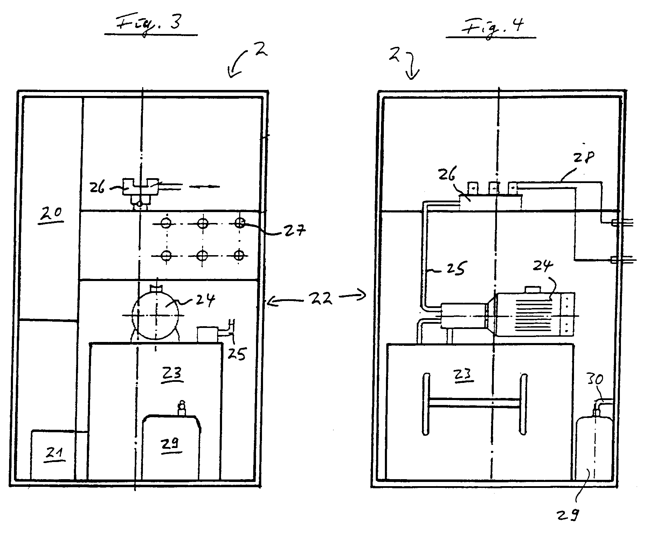

An den vorderen Flächen der Arbeitsmodule 4 - 9 ist jeweils eine Tür 12 mit einem Sicherheitsschloß vorgesehen (Figur 2). Hinter der Tür ist jeweils ein Reststoff-Behälter 13 aneordnet.

Das Kältemodul 3 weist einen Bediendeckel 14 auf. Von dem Kältemodul erstrecken sich Stickstoffleitungen 15 zu den Modulen 6 - 9.

Das Zentralmodul 2 hat an seiner Vorderfläche eine Schalttafel 16 mit einem Notschalter 17 und einem Hauptschalter 18. Über Schalter 19 an der Schalttafel können die einzelnen Module unabhängig voneinander angesteuert werden. Die Anlage 1 kann vollautomatisch die einzelnen Müllfraktionen verarbeiten, wobei nach jedem Einwurf einer bestimmten Müllfraktion und nach hydraulischer Verriegelung der Einwurfdeckel 10 die entsprechenden Arbeitsmodule die Materialien zerkleinern, oder die einzelnen Arbeitsmodule können mittels den Schaltern 19 einzeln an- und ausgeschaltet werden.

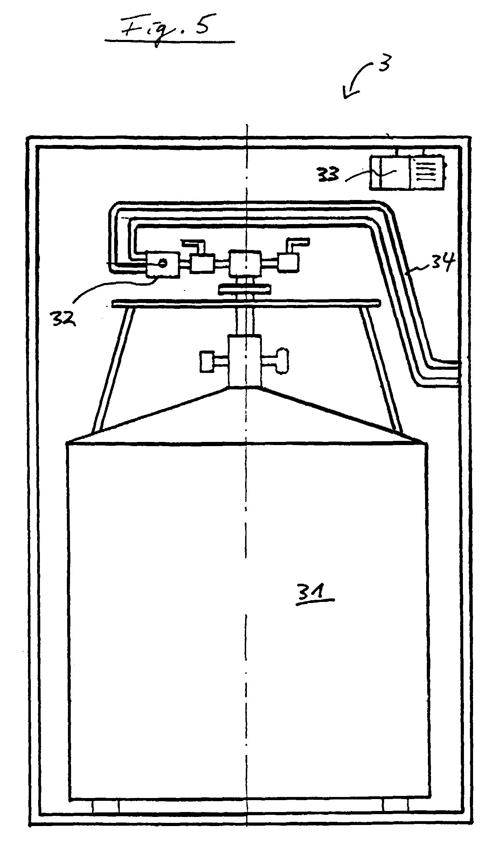

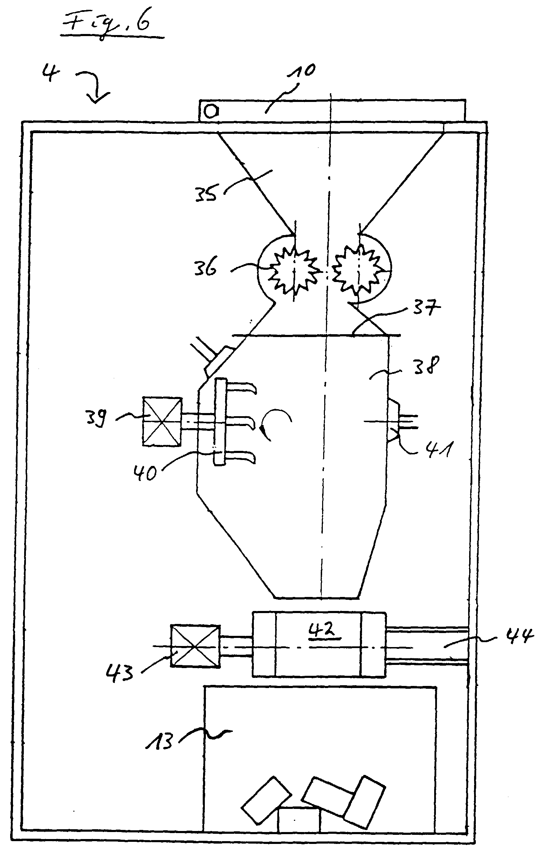

Der Aufbau des Zentralmoduls 2 ist in den Figuren 3 und 4 näher dargestellt. In dem Zentralmodul ist ein zentraler Schaltkasten 20 mit Relais für die einzelnen Module, ein Stromumwandler 21 für die Steuerleitungen sowie eine Hydraulikeinrichtung 22 angeordnet. Die Hydraulikeinrichtung 22 umfaßt einen Hydraulikölbehälter 23, einen Antrieb 24, eine Druckleitung 25 zu einem zentralen Hydraulikblock 26, von dem die Hydraulikanschlüsse 27 zu den einzelnen Arbeitsmodulen abgehen. Ferner ist ein Hydraulikanschluß 28 für eine in dem Papiermodul 4 angeordnete Preßeinrichtung vorgesehen. Im unteren Teil des Zentralmoduls 2 ist ferner ein Wasserbehälter 29 angeordnet, der über eine Leitung 30 (siehe auch Figur 1) mit einer Sprühvorrichtung in dem Papiermodul in Verbindung steht. Entsprechende Steuerungs- und Stromleitungen verbinden das Zentralmodul mit den Arbeitsmodulen.

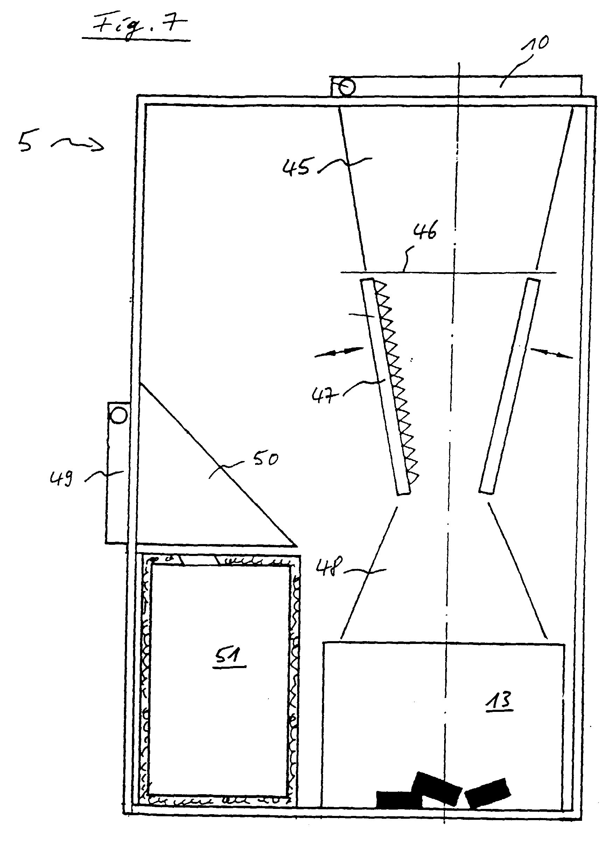

Das Kältemodul 3 ist in der Figur 5 vergrößert dargestellt. Ein Stickstoffbehälter 31, der flüssigen Stickstoff aufnimmt, ist in dem Kältemodul angeordnet. Über einen Stickstoffverteiler 32 mit Schlauchabgängen 34 zu den Modulen 6 - 9 werden diese Module mit flüssigem Stickstoff versorgt. Im oberen Teil des Kältemoduls ist eine Pumpe 33 für die Berieselung der Papierfraktion in dem Papiermodul 4 angeordnet.

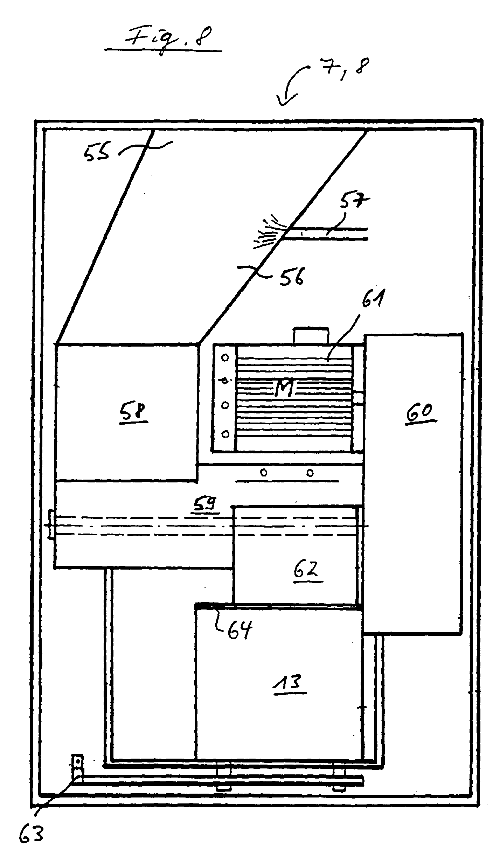

Das Papier/Pappe-Modul 4 gemäß Figur 6 weist an seiner Oberseite den Einwurfdeckel 10 mit Sicherheitsschließung auf. Eingeführtes Papier gelangt über einen Einfüllschacht 35 zu Zerkleinerungswalzen 36, unter denen ein hydraulischer Schieber 37 angeordnet ist. Nach einem bestimmten Zerkleinerungszeitraum wird der Schieber automatisch geöffnet, so daß die zerkleinerten Materialien in einen Zwischenbehälter 38 gelangen, in dem ein elektrischer Antrieb 39 ein Misch- und Transportaggregat 40 antreibt. Mittels einer Sprühvorrichtung 41, die über die Leitung 30 versorgt wird, werden die zerkleinerten Papiere befeuchtet. Nach einer ausreichenden Mischung und Bewässerung fallen die Papiere in einen zweiten Behälter 42, in dem sie mittels einer hydraulischen Preßvorrichtung 43 mit einem Gegenlager 44 zu Papierbriketts zusammengepreßt werden, die in dem darunter angeordneten Reststoff-Behälter 13 gelagert werden, bis eine Entsorgung vorgenommen wird.

Bei dem Papiermodul gemäß Figur 6 wird eine Behandlung mit flüssigem Stickstoff über das Kältemodul 3 nicht vorgenommen, da in der Regel eine solche Behandlung bei Papier nicht notwendig ist. In Abhängigkeit von der Verarbeitung eines starken Pappmaterials oder von dem Verschmutzungsgrad des Papiers/der Pappe kann jedoch auch hier ein Schockfrieren durchgeführt werden, wobei dann entsprechende Einrichtungen vorgesehen sind, die weiter unten in Zusammenhang mit anderen Arbeitsmodulen beschrieben werden.

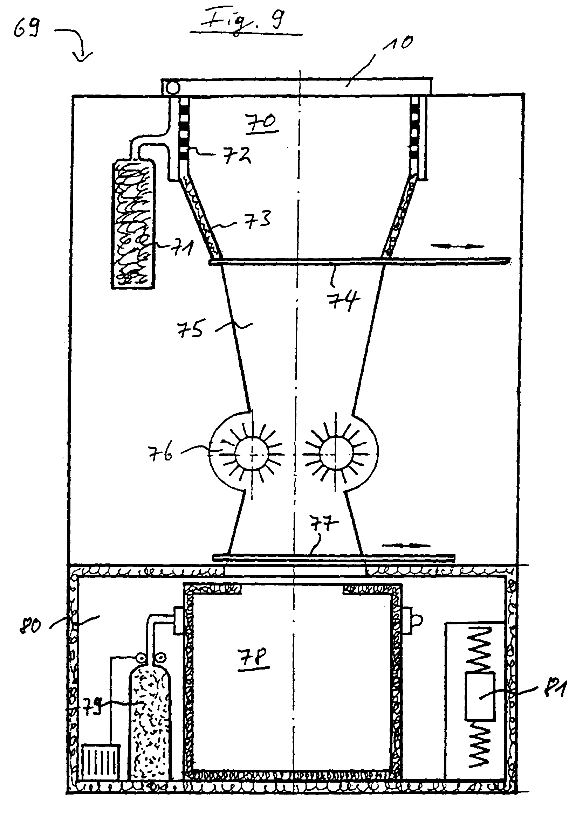

Bei dem Blechmodul 5 gemäß Figur 7 ist ebenfalls keine Stickstoff-Behandlung vorgesehen, da bei dieser Ausführungsform gereinigte Blechdosen oder ähnliches verarbeitet werden. Selbstverständlich ist auch hier eine Stickstoff-Behandlung möglich. Das Blechmodul 5 weist einen Einwurfdeckel 10 auf, woran sich ein Einführschacht 45 anschließt. Über einen hydraulischen Schieber 46 gelangen die Blechmaterialien in eine Backenpresse 47, deren Bewegung mit den Doppelpfeilen dargestellt ist. Der entsprechende Antrieb ist nicht dargestellt. Über einen Zwischenschacht 48 fallen die Blechbriketts in einen Reststoff-Behälter 13.

Das Blechmodul gemäß Figur 7 weist ferner einen an der Vorderseite angeordneten Verschlußdeckel 49 auf. Hier besteht die Möglichkeit einer getrennten Sammlung von Spraydosen, -flaschen etc., die über einen Einwurfschacht 50 in den Aufnahmebehälter 51 gelangen.

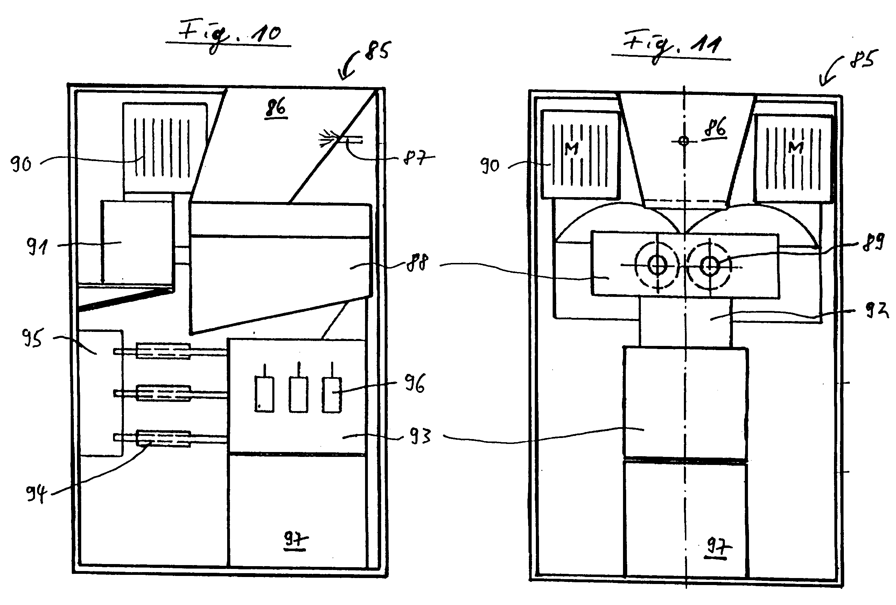

Das Problemmüll-Modul 8 und das Modul für organische Abfälle 7 ist in der Figur 8 dargestellt. Beide Module haben den gleichen Aufbau. An einen Einfüllschacht 55, wobei der Einwurfdeckel 10 hier nicht gezeigt ist, schließt sich ein Kühlschacht 56 an, in dessen Wänden mindestens eine Zuführungseinrichtung für das Kühlmittel in Form einer Einspritzdüse 57 für flüssigen Stickstoff angeordnet ist. Der flüssige Stickstoff wird von dem Stickstoffbehälter 31 des Kältemoduls 3 (Figur 5) über eine Schlauchleitung zur Verfügung gestellt. Nach ausreichender Schockfrierung des Materials, z. B. auf -30°C bei einer Gefrierzeit von 40 sec, wozu auch ein Temperaturmeßfühler (nicht gezeigt) verwendet werden kann, gelangen die gefrorenen Materialien in einen gekühlten Zuführbehälter 58 und von dort zu einem Zerkleinerungsaggregat 59, das ein Schnecken-Schneidsystem oder eine Schneidmühle ist. Das Zerkleinerungsaggregat wird über ein Antriebsgetriebe 60 und einen Antrieb 61 angetrieben. Das kleingeschnittene und gefrorene Material wird in einen Auswurfschacht 62 und von dort in den Reststoff-Behälter 13 geführt. Dieser Behälter wird über einen Hebel 63 mit Excenter gegen einen Dichtring 64 gepreßt, so daß eine ausreichende Kühlung der Reststoffe gesichert und eine Geruchsbelästigung vermieden wird. Der Reststoffbehälter kann ferner zusätzlich mittels einer konventionellen Gefriermaschine gekühlt werden oder ebenfalls Einspritzdüsen für flüssigen Stickstoff aufweisen (nicht gezeigt).

Das Kunststoffmodul 9 und das Glasmodul 6 gemäß Figur 1 besitzen einen im wesentlichen identischen Aufbau gemäß Figur 8, so daß diese Module nicht näher dargestellt sind. Das Zerkleinerungsaggregat 59 kann dabei als Schneidmühle (Kunststoff) oder als Backenbrecher (Glas) ausgebildet sein.

Bei der oben beschriebenen Ausführungsform werden die Materialen der Glas-, Problemmüll-, Kunststoffmodule sowie des Moduls für organische Abfälle vor der Zerkleinerung mit flüssigem Stickstoff behandelt, wobei das Kältemittel zentral von dem Kältemodul 3 zugeführt wird.

Gemäß einer anderen Ausführungsform können die einzelnen Arbeitsmodule jedoch auch selbst eine geeignete Kühleinrichtung aufweisen. Das in der Figur 9 gezeigte Arbeitsmodul 69 ist grundsätzlich für die Verarbeitung von Problemmüll, organischen Abfällen, Kunststoff und Glas geeignet. In Abhängigkeit von dem zu zerkleinernden Material können unterschiedliche Zerkleinerungseinrichtungen (z. B. Backenbrecher, Vorbrecher, Schneidmühle) vorgesehen sein. Das Arbeitsmodul weist einen Einwurfdeckel 10 mit Sicherheitsschließung gemäß der obigen Beschreibung auf. Unterhalb des Deckels ist eine Gefrierkammer 70 angeordnet, in die ein Kühlmittel aus einem Behälter 71 über Düsen 72 eingespritzt wird. Die Wände 73 der Gefrierkammer sind in geeigneter Weise isoliert. Nach ausreichender Abkühlung der eingeführten Materialien, wozu ggf. zusätzlich ein Temperaturmeßfühler eingesetzt werden kann, wird ein elektronisch-hydraulischer Schieber 74 automatisch betätigt, so daß die Materialien über einen Zwischenbehälter 75 zu den Zerkleinerungswalzen 76 gelangen, wo die Zerkleinerung stattfindet. Nach Betätigung eines zweiten elektronisch-hydraulischen Schiebers 77 fallen die zerkleinerten, gefrorenen Materialien in eine Thermobox 78, in die ebenfalls ein Kältemittel über einen Behälter 79 einführbar ist, so daß der gefrorene Zustand der zerkleinerten Materialien gewährleistet ist. Die Thermobox 78 ist in einer Kältekammer 80 angeordnet, die mittels einer Kältemaschine 81 auf -5°C gehalten wird.

Die Figuren 10 und 11 zeigen eine weitere Ausführungsform eines Papier/Pappe-Moduls 85, das für die Anlage 1 gemäß Figur 1 verwenden ist.

In einem Einfüllschacht 86 wird die Papier/Pappe-Fraktion zunächst mittels mindestens einer Einspritzdüse 87 für Wasser befeuchtet und gelangt in ein Zerkleinerungsaggregat 88, in dem das befeuchtete Papier mit zwei gegenläufigen Zerkleinerungswalzen 89 zerkleinert wird, die mittels Motoren 90 und Getrieben 91 angetrieben werden. Der befeuchtete Papierbrei wird über einen Trichter 92 in eine Hydraulikpresse 93 mit Hydraulikzylinder 94, Gelenkaufnahme 95 und Steuerungsventilen 96 befördert. Die Papierbriketts werden in einem Reststoff-Behälter 97 gesammelt.

## Patentansprüche

1. Müllreduzierungs- und Verwertungsanlage mit einem oder mehreren Arbeitsmodulen (4 - 9, 69) für die Verarbeitung getrennt gesammelter Müllfraktionen, die Einrichtungen (37, 47, 59, 76, 88) für die Zerkleinerung und/oder Volumenreduktion der einzelnen Müllfraktionen aufweisen, dadurch gekennzeichnet, daß die Anlage mindestens eine Kühleinrichtung (31, 34, 71, 79, 81) für das Abkühlen von ausgewälten Müllfraktionen vor der Zerkleinerung und/oder Volumenreduktion derselben aufweist, die in mindestens einem Arbeitsmodul (4, 9, 69) oder in einem getrennten Kältemodul (3) angeordnet ist.

2. Anlage nach Anspruch 1, dadurch gekennzeichnet, daß die mindestens eine Kühleinrichtung eine Kältemaschine (81) mit insbesondere CO₂ als Kältemittel ist.

3. Anlage nach Anspruch 1 oder 2, dadurch gekennzeichnet, daß eine Kühleinrichtung (31) vorgesehen ist, die in einem Kältemodul (3) angeordnet ist, das abhängig von der zu verarbeitenden Müllfraktion mit einzelnen Arbeitsmodulen (6 - 9) über eine Leitung (34) verbunden ist.

4. Anlage nach Anspruch 3, dadurch gekennzeichnet, daß das Kältemodul (3) einen flüssigen Stickstoff enthaltenden Stickstoffbehälter (31) aufweist, an den ein Stickstoffverteiler (31) mit einzelnen Schlauchabgängen (34) zu den jeweiligen Arbeitsmodulen (6 - 9) angeschlossen ist.

5. Anlage nach einem der Ansprüche 1, 3 oder 4, dadurch gekennzeichnet, daß die Arbeitsmodule (6 - 9, 69), in denen zu kühlende Müllfraktionen zu verarbeiten sind, Düsen (57, 72) für die Einspritzung des Kühlmittels aufweisen, die oberhalb der Zerkleinerungseinrichtung (59, 76) angeordnet sind.

6. Anlage nach einem der Ansprüche 1, 2 oder 5, dadurch gekennzeichnet, daß die Arbeitsmodule (69), in denen zu kühlende Müllfraktionen zu verarbeiten sind, jeweils eigene Kühleinrichtungen (71, 79, 81) aufweisen.

7. Anlage nach einem der Ansprüche 1 bis 6, dadurch gekennzeichnet, daß die Arbeitsmodule (6 - 9, 69), in denen zu kühlende Müllfraktionen zu verarbeiten sind, Reststoff-Behälter (13, 78) aufweisen, welche die zerkleinerten und abgekühlten Müllfraktionen aufnehmen und die mittels der mindestens einen Kühleinrichtung (71, 79) gekühlt sind.

8. Anlage nach einem der Ansprüche 1 bis 6, dadurch gekennzeichnet, daß ferner ein Zentralmodul (2) für die Steuerung der Anlage vorgesehen ist.

9. Anlage nach Anspruch 8, dadurch gekennzeichnet, daß das Zentralmodul (2) eine Hydraulikeinrichtung (22) mit Abgängen (27) zu den einzelnen Arbeitsmodulen (4 - 9) aufweist.

10. Anlage nach einem der Ansprüche 1 bis 9, dadurch gekennzeichnet, daß die Arbeitsmodule hydraulisch betätigbare Schieber (37, 46, 74, 77) für die Zuführung der einzelnen Müllfraktionen zu den Zerkleinerungseinrichtungen (36, 47, 59, 76) und/oder zu den Reststoffbehältern (13, 78) aufweisen.

11. Anlage nach einem der Ansprüche 1 bis 10, dadurch gekennzeichnet, daß die Arbeitsmodule jeweils einen Einwurfdeckel (10) aufweisen, der hydraulisch oder durch einen Motor verriegelbar ist.

12. Anlage nach einem der Ansprüche 1 bis 11, dadurch gekennzeichnet, daß Antriebe (39, 61, 90) für die Zerkleinerungseinrichtungen in den Arbeitsmodulen angeordnet sind.

13. Anlage nach einem der Ansprüche 1 bis 12, dadurch gekennzeichnet, daß die ein Zentralmodul (2), ein Kältemodul (3), ein Papier/Pappe-Modul (4, 85), ein Blechmodul (5), ein Glasmodul (6), ein Modul für organischen Müll (7), ein Problemmüll-Modul (8) und ein Kunststoff-Modul (9) aufweist.

14. Anlage nach einem der Ansprüche 1 bis 13, dadurch gekennzeichnet, daß das Arbeitsmodul (5) eine Backenpresse (47), Zerkleinerungswalzen (36, 76, 89) und/oder ein Schneidsystem mit Schnecke als Zerkleinerungseinrichtung aufweist.

15. Anlage nach einem der Ansprüche 1 bis 14, dadurch gekennzeichnet, daß das Blechmodul (5) einen Einwurfschacht (45) für Blechdosen oder ähnliches und einen Einwurfschacht (50) für Sprayflaschen oder ähnliches aufweist.

16. Anlage nach einem der Ansprüche 1 bis 15, dadurch gekennzeichnet, daß das Papier/Pappe-Modul (4, 85) eine hydraulische Preßeinrichtung (43, 93) für das zerkleinerte und angefeuchtete Papier aufweist.

17. Anlage nach einem der Ansprüche 1 bis 16, dadurch gekennzeichnet, daß mindestens ein Arbeitsmodul (4 - 9, 69, 85) eine Reinigungseinrichtung für die Reinigung der Müllfraktion aufweist.

18. Anlage nach einem der Ansprüche 1 bis 17, dadurch gekennzeichnet, daß (mindestens ein Arbeitsmodul (4 - 9, 69, 85) eine Einrichtung zur Behandlung der Müllfraktion mit einem anti-mikrobiellen Mittel und/oder Flammschutzmittel aufweist.

## Claims

1. A garbage reducing and recycling plant comprising one working module or a plurality of working modules (4-9, 69) for the processing of separately collected garbage fractions, said working modules including means (37, 47, 59, 76, 88) for the comminution and/or volume reduction of the several garbage fractions, characterized in that the plant has at least one cooling means (31, 34, 71, 79, 81) for the cooling of selected garbage fractions prior to the comminution and/or volume reduction thereof, said cooling means being disposed in at least one working module (4, 9, 69) or in a separate refrigerating module (3).

2. The plant according to claim 1, characterized in that the at least one cooling means is a refrigerating machine (81) with especially CO₂ as refrigerating agent.

3. The plant according to claim 1 or 2, characterized in that a cooling means (31) is provided which is disposed within a refrigerating module (3) which, dependent on the garbage fraction to be processed, is connected to several working modules (6-9) through a conduit (34).

4. The plant according to claim 3, characterized in that the refrigerating module (3) has a nitrogen container (31) containing liquid nitrogen and connected to a nitrogen distributor (31) with several hose lines (34) to the respective working modules (6-9).

5. The plant according to one of the claims 1, 3 or 4, characterized in that the working modules (6-9, 69) in which garbage fractions to be cooled have to be processed include nozzles (57, 72) for the injection of the cooling agent which are disposed above the comminution means (59, 76).

6. The plant according to one of the claims 1, 2 or 5, characterized in that the working modules (69) in which the garbage fractions to be cooled are to be processed include own cooling means (71, 79, 81), respectively.

7. The plant according to one of the claims 1 to 6, characterized in that the working modules (6-9, 69) in which the garbage fractions to be cooled are to be processed include containers (13, 78) for residual substances which take up the comminuted and cooled garbage fractions and which are cooled by means of the at least one cooling means (71, 79).

8. The plant according to one of the claims 1 to 6, characterized in that furthermore a central module (2) for the control of the plant is provided.

9. The plant according to claim 8, characterized in that the central module (2) includes a hydraulic means (22) with lines (27) to the several working modules (4-9).

10. The plant according to one of the claims 1 to 9, characterized in that the working modules include hydraulically actuatable gates (37, 46, 74, 77) for the supply of the several garbage fractions to the comminution means (36, 47, 59, 76) and/or to the containers (13, 78) for the residual substances.

11. The plant according to one of the claims 1 to 10, characterized in that the working modules contain a throw-in lid (10), respectively, which is lockable hydraulically or by means of a motor.

12. The plant according to one of the claims 1 to 11, characterized in that drive means (39, 61, 90) for the comminution means are disposed within the working modules.

13. The plant according to one of the claims 1 to 12, characterized in that it includes a central module (2), a refrigerating module (3), a module (4, 85) for paper/paperboard, a module (5) for sheet metal, a module (6) for glass, a module for organic garbage (7), a module (8) for problematic garbage and a module (9) for plastics.

14. The plant according to one of the claims 1 to 13, characterized in that the working module (5) includes a jaw press (47), comminution rolls (36, 76, 89) and/or a cutting system with a worm as comminution means.

15. The plant according to one of the claims 1 to 14, characterized in that the module (5) for sheet metal has a throw-in shaft (45) for sheet metal cans etc. and a throw-in shaft (50) for spray bottles etc.

16. The plant according to one of the claims 1 to 15, characterized in that the module (4, 85) for paper/paperboard has a hydraulic pressing means (43, 93) for the comminuted and wetted paper.

17. The plant according to one of the claims 1 to 16, characterized in that at least one working module (4-9, 69, 85) includes a cleaning means for the cleaning of the garbage fraction.

18. The plant according to one of the claims 1 to 17, characterized in that at least one working module (4-9, 69, 85) includes a means for treating the garbage fraction with an anti-microbian agent and/or a flame protection agent.

## Revendications

1. Installation de réduction et de valorisation des immondices comprenant un ou plusieurs modules de travail (4-9, 69) pour le traitement de fractions d'immondices récoltées séparément, qui présentent des dispositifs (37, 47, 59, 76, 88) pour la fragmentation et/ou la réduction de volume des différentes fractions d'immondices, caractérisée en ce que l'installation présente au moins un dispositif de refroidissement (31, 34, 71, 79, 81) pour le refroidissement de fractions d'immondices sélectionnées avant la fragmentation et/ou réduction de volume de celles-ci, dispositif qui est agencé dans au moins un module de travail (4, 9, 69) ou dans un module frigorifique séparé (3).

2. Installation suivant la revendication 1, caractérisée en ce que le au moins un dispositif de refroidissement est une machine frigorifique (81) avec en particulier CO₂ comme agent frigorigène.

3. Installation suivant l'une des revendications 1 et 2, caractérisée en ce qu'un dispositif de refroidissement (31) est prévu qui est agencé dans un module frigorifique (3) qui, en fonction de la fraction d'immondices à traiter, est relié à différents modules de travail (6-9) par un conduit (34).

4. Installation suivant la revendication 3, caractérisée en ce que le module frigorifique (3) présente un réservoir à azote (31) qui contient de l'azote liquide et auquel un distributeur d'azote (31) est raccordé avec différentes sorties (34) vers les modules de travail respectifs (6-9).

5. Installation suivant l'une des revendications 1, 3 et 4, caractérisée en ce que les modules de travail (6-9, 69), dans lesquels des fractions d'immondices à refroidir sont à traiter, présentent des tuyères (57, 72) pour l'injection de l'agent refroidissant, tuyères qui sont agencées au-dessus du dispositif de fragmentation (59, 76).

6. Installation suivant l'une des revendications 1, 2 ou 5, caractérisée en ce que les modules de travail (69), dans lesquels des fractions d'immondices à refroidir sont à traiter, présentent chacun des dispositifs de refroidissement propres (71, 79, 81).

7. Installation suivant l'une des revendications 1 à 6, caractérisée en ce que les modules de travail (6-9, 69), dans lesquels des fractions d'immondices à refroidir sont à traiter, présentent des réservoirs à matière résiduaire (13,78) qui reçoivent les fractions d'immondices fragmentées et refroidies et qui sont refroidis au moyen d'au moins un dispositif de refroidissement (71, 79).

8. Installation suivant l'une des revendications 1 à 6, caractérisée en ce qu'en outre un module central (2) est prévu pour la commande de l'installation.

9. Installation suivant la revendication 8, caractérisée en ce que le module central (2) présente un dispositif hydraulique (22) avec des sorties (27) vers les différents modules de travail (4-9).

10. Installation suivant l'une des revendications 1 à 9, caractérisée en ce que les modules de travail présentent des tiroirs (37, 46, 74, 77) actionnables par voie hydraulique pour l'amende des différentes fractions d'immondices aux dispositifs de fragmentation (36, 47, 59, 76) et/ou aux réservoirs à matière résiduaire (13, 78).

11. Installation suivant l'une des revendications 1 à 10, caractérisée en ce que les modules de travail présentent chacun un couvercle d'alimentation (10) qui peut être verrouillé par voie hydraulique ou par un moteur.

12. Installation suivant l'une des revendications 1 à 11, ceractérisée en ce que des commandes (39, 61, 90) pour les dispositifs de fragmentation sont agencées dans les modules de travail.

13. Installation suivant l'une des revendications 1 à 12, caractérisée en ce qu'elle présente un module central (2), un module frigorifique (3), un module à papier/carton (4, 85), un module à tôle (5), un module à verre (6), un module pour des immondices organiques (7), un module à immondices problématiques (8) et un module à matière synthétique (9).

14. Installation suivant l'une des revendications 1 à 13, caractérisée en ce que le module de travail (5) présente une presse à mâchoires (47), des cylindres de fragmentation (36, 76, 89) et/ou un système de coupe à vis, comme dispositif de fragmentation.

15. Installation suivant l'une des revendications 1 à 14, caractérisée en ce que le module à tôle (5) présente un puits d'alimentation (45) pour des boîtes métalliques ou des objets analogues et un puits d'alimentation (50) pour des bouteilles de pulvérisation ou des objets analogues.

16. Installation suivant l'une des revendications 1 à 15, caractérisée en ce que le module à papier/carton (4, 85) présente un dispositif de pressage hydraulique (43, 93) pour le papier fragmenté et humidifié.

17. Installation suivant l'une des revendications 1 à 16, caractérisée en ce qu'au moins un module de travail (4-9, 69, 85) présente un dispositif de nettoyage pour nettoyer la fraction d'immondices.

18. Installation suivant l'une des revendications 1 à 17, caractérisée en ce qu'au moins un module de travail (4-9, 69, 85) présente un dispositif de traitement de la fraction d'immondice par un agent antimicrobien et/ou un agent ignifuge.
